# EUROPÄISCHE PATENTSCHRIFT

(11) **EP 3 638 450 B1**
(45) Veröffentlichungstag und Bekanntmachung des Hinweises auf die Patenterteilung: **27.01.2021**
(21) Anmeldenummer: 18727275.2
(22) Anmeldetag: 24.05.2018
(51) Int. Cl.: B23P 9/04, C21D 7/04

(54) **VERFAHREN UND VORRICHTUNG ZUM SCHLAGVERFESTIGEN VON ÜBERGANGSRADIEN EINER KURBELWELLE**
METHOD AND DEVICE FOR THE IMPACT TREATMENT OF TRANSITION RADII OF A CRANKSHAFT
PROCÉDÉ ET DISPOSITIF D'ÉCROUISSAGE DE RAYONS DE TRANSITION D'UN VILEBREQUIN

(30) Priorität: 14.06.2017 DE 102017113065
(43) Veröffentlichungstag der Anmeldung: 22.04.2020
(73) Patentinhaber: Maschinenfabrik Alfing Kessler GmbH, 73433 Aalen (DE)
(72) Erfinder: REEB, Alfons, 73434 Aalen (DE); SCHMIDT, Jochen, 73560 Boebingen a. d. Rems (DE); GRIMM, Konrad, 73433 Aalen (DE)
(74) Vertreter: Lorenz, Markus
(86) Internationale Anmeldenummer: PCT/EP2018/063689
(87) Internationale Veröffentlichungsnummer: WO 2018/228790

(56) Entgegenhaltungen:
- EP-A1- 1 716 260
- DE-A1- 3 438 742
- US-A- 4 416 130

## Beschreibung

Die Erfindung betrifft ein Verfahren zum Schlagverfestigen von Übergangsradien einer Kurbelwelle, insbesondere von Übergangsradien zwischen Pleuellagerzapfen und Kurbelwangen und/oder Übergangsradien zwischen Hauptlagerzapfen und den Kurbelwangen der Kurbelwelle nach dem Oberbegriff von Anspruch 1.

Die Erfindung betrifft auch eine Vorrichtung zum Schlagverfestigen von Übergangsradien einer Kurbelwelle nach dem Oberbegriff von Anspruch 10.

Die Erfindung betrifft außerdem ein Computerprogramm mit Programmcodemitteln.

Aufgrund der stetig fortschreitenden Entwicklung und Leistungssteigerung von Brennkraftmaschinen und an diese gestellten strengen Emissionsforderungen werden heutige Motoren in Folge immer stärker beansprucht. Aus diesem Grund stellt die Motorenindustrie unter anderem an die hochbelastete und für die Funktion einer Brennkraftmaschine wichtige Kurbelwelle hohe Anforderungen hinsichtlich der Festigkeit. Konstruktiv besteht dabei häufig die Anforderung, dass die Kurbelwelle leicht und der Platzbedarf gering sein soll. Für die Auslegung der Kurbelwelle bedeutet dies, dass eine Erhöhung der Beanspruchbarkeit nicht über die Erhöhung des Querschnitts, also über das Widerstandsmoment der Kurbelwelle, sondern möglichst über lokale Druckeigenspannungszustände erzielt werden sollte. Aus diesem Grund werden moderne Kurbelwellen unter Verwendung der verschiedensten Bearbeitungs- und Wärmebehandlungsverfahren hergestellt, so dass die Kurbelwellen immer höheren Motorleistungen ausgesetzt werden können.

Beispiele für solche Verfahren sind thermische Behandlungen, wie die Oberflächenhärteverfahren Induktions- und Einsatzhärten, Laserhärten oder Nitrieren, sowie Kaltverfestigungsverfahren, wie Festwalzen, Kugelstrahlen oder Schlagverfestigen. Hierbei handelt es sich um gängige und zum großen Teil ausgereifte Verfahren, die für die verschiedensten Einsatzzwecke geeignet sind.

Hinsichtlich Beispielen für solche Verfahren wird auf die folgenden Druckschriften verwiesen: EP 1 479 480 A1, EP 0 788 419 B1, EP 1 612 290 A1, DE 10 2007 028 888 A1 und EP 1 034 314 B1.

Insbesondere das Schlagverfestigen ist ein vorteilhaftes Verfahren zur Steigerung der Dauerschwingfestigkeit, insbesondere der Biegewechselfestigkeit und der Torsionswechselfestigkeit, von Kurbelwellen. Die Steigerung der Dauerfestigkeit wird dabei dadurch erreicht, dass in die beanspruchten Bereiche bei Querschnittsübergängen und Querschnittsänderungen durch Kaltverformen, vorzugsweise Hämmern mittels spezieller Schlagwerkzeuge, in die Kurbelwelle Schlagkräfte eingebracht werden. Als Beispiel für ein derartiges Verfahren wird auf die gattungsgemäße DE 34 38 742 C2 und die EP 1 716 260 B1 verwiesen.

Um ein nachteiliges Einbringen von Schubspannungen beim örtlichen Hämmern zu vermeiden, wird in der DE 34 38 742 C2 vorgeschlagen, zum Zeitpunkt der Druckimpulseinwirkung zwischen dem den Impuls ausgebenden Körper und der Werkstückoberfläche quer zur Impulsrichtung keine Relativbewegung stattfinden zu lassen. Hierzu soll der Vorschub während der Einbringung von Druckeigenspannungen durch die Schlagwerkzeuge schrittweise erfolgen.

Als Weiterentwicklung dieses Verfahrens wurde in der EP 1 716 260 B1 vorgeschlagen, dass die Kurbelwelle während der Bearbeitung kontinuierlich gedreht wird, wobei während der Druckeigenspannungseinbringung durch das Auftreffen des Schlagwerkzeugs auf das zu bearbeitende Kurbelwellensegment die Drehbewegung der Kurbelwelle während der Einwirkungszeit des Schlagwerkzeugs auf die Kurbelwelle gestoppt wird. Dabei werden die Schlagdrücke so gewählt, dass die Drehbewegung der Kurbelwelle zwangsweise durch die Schlagbewegung gestoppt wird.

Hierfür sind allerdings innerhalb der Antriebseinrichtung komplexe Komponenten wie z. B. Getriebe, Kupplungen und/oder Federsysteme notwendig, um zu vermeiden, dass die Antriebseinrichtung durch die "Zwangsstopps" Schaden erleidet. Des Weiteren muss die Taktung der Kurbelwelle und das Einbringen der Druckeigenspannungen prozesssicher synchronisiert werden. Die benötigten mechanischen Komponenten zur Sicherstellung einer robusten Anlage sind dabei komplex und teuer.

Der vorliegenden Erfindung liegt die Aufgabe zugrunde, ein kostengünstiges und zuverlässiges Verfahren und eine Vorrichtung zum Erhöhen der Dauerfestigkeit von Kurbelwellen bereitzustellen.

Diese Aufgabe wird für das Verfahren durch die in Anspruch 1 aufgeführten Merkmale und für die Vorrichtung durch die in Anspruch 10 aufgeführten Merkmale gelöst.

Schließlich liegt der Erfindung auch die Aufgabe zugrunde, ein Computerprogramm mit Programmcodemitteln bereitzustellen, um ein verbessertes Verfahren zum Erhöhen der Dauerfestigkeit von Kurbelwellen durchzuführen.

Bezüglich des Computerprogramms wird die Aufgabe durch die in Anspruch 15 aufgeführten Merkmalen gelöst.

Die abhängigen Ansprüche und die nachfolgend beschriebenen Merkmale betreffen vorteilhafte Ausführungsformen und Varianten der Erfindung.

Bei dem erfindungsgemäßen Verfahren zum Schlagverfestigen ist vorgesehen, dass Übergangsradien einer Kurbelwelle, insbesondere Übergangsradien zwischen Pleuellagerzapfen und Kurbelwangen und/oder Übergangsradien zwischen Hauptlagerzapfen und den Kurbelwangen der Kurbelwelle schlagverfestigt werden. Dabei wird die Kurbelwelle mittels einer Antriebseinrichtung zunächst entlang einer Drehrichtung in eine Schlagposition gedreht.

Die Pleuellagerzapfen und die Hauptlagerzapfen werden zur Vereinfachung nachfolgend teilweise auch nur als "Zapfen" bezeichnet. Der Begriff Zapfen kann dabei sowohl die Pleuellagerzapfen und die Hauptlagerzapfen bezeichnen, als auch nur die Pleuellagerzapfen oder nur die Hauptlagerzapfen. Insofern dies nicht explizit anders angegeben ist, sind hier alle drei Varianten durch den Begriff Zapfen umfasst.

Besonders bevorzugt eignet sich die Erfindung zur Steigerung der Dauerfestigkeit von beispielsweise Kurbelwellen mit 0,2 bis 8 m Länge oder mehr und/oder Haupt- und Pleuellagerzapfendurchmesser von 30 bis 500 mm oder mehr. Ganz besonders eignet sich die Erfindung allerdings zur Steigerung der Dauerfestigkeit von Großkurbelwellen von 1,5 bis 8 m Länge oder mehr und/oder Haupt- und Pleuellagerzapfendurchmesser von 100 bis 500 mm oder mehr.

Die Kurbelwelle kann verschiedene Arten von Übergangsradien, beispielsweise Hohlkehlen, zum Beispiel in Korbbogenform, oder auch hinterschnittene bzw. hinterlegte Radien bzw. Radien mit Übergängen, aufweisen. Die Übergangsradien können beispielsweise tangierend in die Lagerzapfenstellen bzw. Laufflächen der Haupt- und Pleuellagerzapfen übergehen.

Dies gilt auch für Übergänge zu Flanschen, Zapfen und sonstigen geometrischen Querschnittsveränderungen - sowohl für tangierende wie hinterlegte Radien.

Üblicherweise weist die Kurbelwelle an allen Übergängen bzw. Querschnittsänderungen Übergangsradien auf. Dies gilt insbesondere für Querschnittsänderungen zwischen Lagerzapfen und Kurbelwangen. Hierfür eignet sich die Erfindung in besonderer Weise. Übergangsradien können aber auch für beliebige andere Querschnittsänderungen, insbesondere für Querschnittsänderungen an den Endpartien der Kurbelwelle, z. B. bei einem Übergang auf einen Flansch, eine Scheibe oder eine Welle etc., vorgesehen sein. Ein Übergangsradius, dessen Dauerfestigkeit durch das erfindungsgemäße Verfahren bzw. die erfindungsgemäße Vorrichtung verbessert werden soll, muss somit nicht unbedingt zwischen einem Pleuellagerzapfen und einer Kurbelwange oder einem Hauptlagerzapfen und einer Kurbelwange vorliegen, sondern kann an einer beliebigen Stelle der Kurbelwelle angeordnet sein. Die Begriffe "Pleuellagerzapfen", "Hauptlagerzapfen", "Flansch", "Zapfen" und/oder "Kurbelwange" können dementsprechend von einem Fachmann umgedeutet werden.

Nachfolgend wird die Erfindung im Wesentlichen anhand der Verfestigung von Übergangsradien zwischen Pleuellagerzapfen und Kurbelwange und/oder Hauptlagerzapfen und Kurbelwange beschrieben. Dies ist aber nicht einschränkend zu verstehen und soll nur dem besseren Verständnis bzw. der besseren Lesbarkeit dienen. Insofern im Rahmen der Erfindung auf einen Übergangsradius Bezug genommen wird kann es sich grundsätzlich um einen beliebigen Übergangsradius an einer beliebigen Stelle der Kurbelwelle handeln.

Erfindungsgemäß ist eine Arretiereinrichtung vorgesehen, um die Kurbelwelle in der Schlagposition zu arretieren, wonach durch wenigstens ein Schlagwerkzeug eine Schlagkraft in wenigstens einen Übergangsradius eingebracht wird.

Unter dem Einbringen einer Schlagkraft kann verstanden werden, dass ein Schlagkopf eines Schlagwerkzeugs bzw. ein sog. "Döpper" einer Schlageinrichtung gegen den zu verfestigenden Bereich der Kurbelwelle, vorliegend einen Übergangsradius, schlägt. Der Schlag erfolgt dabei zielgerichtet auf die gewünschte Schlagposition entlang des ringförmig um den Zapfen umlaufenden Übergangsradius. Meist wird ein Schlagkolben eingesetzt, der einen starken Impuls bzw. einen Kraftstoß (z. B. pneumatisch, hydraulisch und/oder elektrisch erzeugt) auf den Schlagkopf überträgt.

Je nach Schlagkraft entstehen sichtbare Schlageindrücke des Schlagkopfes an den jeweiligen Schlagpositionen. Die Tiefe der Schlageindrücke und die Qualität bzw. die Tiefenwirkung der eingebrachten Druckeigenspannung hängen dabei von der gewählten Schlagkraft ab. Das Werkzeug und die Prozessparameter sind vorzugsweise auf die jeweilige Kurbelwelle und dabei ggf. auf partielle geometrische Änderungen (Querschnittsänderungen) exakt abgestimmt.

Bei dem erfindungsgemäßen Verfahren werden (parasitäre) Schubspannungen weitgehend, wenn nicht sogar vollständig, vermieden.

Dadurch, dass die Drehbewegung der Kurbelwelle nicht durch das Schlagwerkzeug selbst, sondern durch die Antriebseinrichtung in der Schlagposition gestoppt wird, sind die Anforderungen an die mechanischen Komponenten der Antriebseinrichtung bzw. möglicherweise sogar die Lebensdauer der Antriebseinrichtung verbessert. Durch die Arretiereinrichtung ist es ferner möglich, die Schlagkraft besonders zielgerichtet in den gewünschten Bereich einzubringen. Dies ist möglich, da sich die Kurbelwelle beim Auftreffen des Schlagwerkzeugs nicht ungewollt entlang oder entgegen der Drehrichtung verdrehen kann.

Durch das erfindungsgemäße Verfahren kann also ein hochpräzises Arbeiten bzw. Schlagverfestigen gewährleistet sein. Die Schlagabstände können ganz besonders gezielt und mit geringen Toleranzen umgesetzt werden.

Bei einer Arretiereinrichtung kann es sich um eine Einrichtung handeln, die die Kurbelwelle vorzugsweise kraftschlüssig und/oder formschlüssig arretiert bzw. mit diesem Ziel in den Antriebsstrang bzw. in die Vorrichtung eingreift. Vorzugsweise ist eine kraftschlüssige Arretierung vorgesehen, wonach die Arretierkraft derart gewählt ist, dass ein Verdrehen der Kurbelwelle beim Einbringen der Schlagkraft vermieden oder zumindest unterdrückt wird.

Bei der Arretiereinrichtung kann es sich um eine hydraulisch, pneumatisch und/oder elektrisch betriebene Arretiereinrichtung handeln.

Vorzugsweise weist die Arretiereinrichtung eine oder mehrere Bremsbacken auf, beispielsweise zwei Bremsbacken, drei Bremsbacken, vier Bremsbacken oder mehr Bremsbacken.

Die Arretiereinrichtung wird vorzugsweise an der Werkstückantriebseinheit angebracht. Beispielsweise kann die Arretiereinrichtung an einem Backenfutter bzw. einem Spannflansch, einem Befestigungsflansch bzw. einer Planscheibe der Werkstückantriebseinrichtung oder direkt auf dem Motor bzw. dem Antrieb angeordnet sein.

Das erfindungsgemäße Verfahren bzw. die erfindungsgemäße Vorrichtung kann auch bei Kurbelwellen angewendet bzw. eingesetzt werden, die bereits vorher zur Steigerung ihrer Dauerfestigkeitseigenschaften durch andere Verfahren bearbeitet worden sind. So kann zum Beispiel eine Kurbelwelle, die durch Induktionshärten gehärtet wurde, nachträglich noch bezüglich ihrer Biege- und Torsionswechselfestigkeit durch eine Einbringung von Druckeigenspannungen nach dem erfindungsgemäßen Verfahren verbessert werden.

In einer Weiterbildung der Erfindung kann vorgesehen sein, dass für den Betrieb der Antriebseinrichtung eine Lageregelung verwendet wird, um die Kurbelwelle in die Schlagposition zu drehen, wonach die Kurbelwelle vorzugsweise schrittweise bzw. getaktet gedreht wird.

Mit einer Lageregelung bzw. Positionsregelung kann somit eine Punkt-zu-Punkt-Bewegung der Kurbelwelle erreicht werden. Beispielsweise kann eine Positionssteuerung eingesetzt werden, um die Kurbelwelle schrittweise bzw. getaktet von einer Schlagposition zur nächsten Schlagposition zu drehen. Im einfachsten Fall kann hierfür eine PTP-Steuerung bzw. Punktsteuerung vorgesehen sein.

Die Antriebseinrichtung kann einen Motor, insbesondere einen Elektromotor, umfassen. Bei dem Elektromotor kann es sich grundsätzlich um einen beliebigen Elektromotor, beispielsweise einen Drehstrommotor (insbesondere eine Drehstrom-Asynchronmaschine), einen Wechselstrommotor, einen Gleichstrommotor oder einen Universalmotor, handeln.

Vorzugsweise kann ein Schrittmotor verwendet werden.

Es kann auch eine zweigeteilte Antriebseinrichtung vorgesehen sein, bei der beispielsweise ein Motor an jedem Ende der Kurbelwelle vorgesehen ist, d. h. ein Synchronantrieb bzw. beidseitiger Antrieb der Kurbelwelle.

In einer Weiterbildung der Erfindung kann vorgesehen sein, dass die Steuerung der Antriebseinrichtung und die Steuerung der Arretiereinrichtung miteinander synchronisiert werden derart, dass die Arretiereinrichtung die Kurbelwelle erst dann arretiert, wenn die Kurbelwelle in der Schlagposition stillsteht.

Die Arretiereinrichtung kann grundsätzlich, bei entsprechender Bauweise, beispielsweise bei einer auf Kraftschluss basierenden Bauweise, auch zum Abbremsen der Drehbewegung der Kurbelwelle verwendet werden. Es ist aber besonders zu bevorzugen, die Arretiereinrichtung lediglich zum Arretieren der Kurbelwelle in der Schlagposition einzusetzen, wodurch die Dynamik bzw. Drehung der Kurbelwelle nur durch die Antriebseinrichtung beeinflusst wird. Das heißt, ein Drehmoment, das zu einer Beschleunigung der Kurbelwelle führt (oder zu einem Abbremsen), sollte vorzugsweise ausschließlich seitens der Antriebseinrichtung eingebracht werden. Beispielsweise können dann die Steuerung der Antriebseinrichtung (z. B. eine Lageregelung) und/oder die Steuerung der Arretiereinrichtung besonders einfach aufgebaut sein. Es kann somit ausreichend sein, durch entsprechendes Zeitmanagement lediglich die Zeitpunkte zu synchronisieren, zu denen Antriebseinrichtung und Arretiereinrichtung auf die Kurbelwelle einwirken. Vorzugsweise wirken die Antriebseinrichtung und die Arretiereinrichtung also nicht gleichzeitig auf die Kurbelwelle ein.

In einer Weiterbildung der Erfindung kann außerdem vorgesehen sein, dass die Steuerung der Arretiereinrichtung und die Steuerung des wenigstens einen Schlagwerkzeugs miteinander synchronisiert werden derart, dass das wenigstens eine Schlagwerkzeug die Schlagkraft erst dann in den wenigstens einen Übergangsradius der Kurbelwelle einbringt, wenn die Kurbelwelle in der Schlagposition arretiert ist.

Hierdurch können ungewünschte Schubspannungen vollständig vermieden werden.

Grundsätzlich kann das Einbringen der Schlagkraft aber auch bereits beginnen, wenn die Kurbelwelle in der Schlagposition noch nicht vollständig arretiert ist.

Die Synchronisierung der Steuerungen der Antriebseinrichtung, Arretiereinrichtung und/oder des wenigstens einen Schlagwerkzeugs kann auch derart erfolgen, dass sich die Zeitpunkte bzw. Zeitbereiche, in denen die einzelnen Komponenten auf die Kurbelwelle einwirken, zumindest teilweise überlappen. Hierdurch kann eine schnellere Taktung des gesamten Verfahrens erreichbar sein.

In einer Weiterbildung der Erfindung kann vorgesehen sein, dass die Antriebseinrichtung als Direktantrieb ausgebildet ist.

Vorzugsweise ist eine Antriebseinrichtung ohne Kupplung vorgesehen.

Unter einem Direktantrieb werden vorliegend Antriebe verstanden, bei denen der Motor, vorzugsweise ein Elektromotor, und die antreibende Welle direkt bzw. ohne Übersetzung verbunden bzw. gekoppelt sind. Insbesondere auf ein Getriebe wird verzichtet.

Vorzugsweise kann bei Verwendung des erfindungsgemäßen Verfahrens auch auf eine Kupplung, insbesondere eine Rutschkupplung, verzichtet werden. Eine Rutschkupplung, mitunter zum Schonen von Bauteilen, ist beispielsweise in dem Verfahren gemäß der EP 1 716 260 B1 vorgesehen, um beim Zwangsstopp der Kurbelwelle durch das Auftreffen des Schlagkopfes die Antriebseinrichtung bzw. die Vorrichtung nicht zu beschädigen. Eine derartige Beschädigung ist bei dem vorliegend beschriebenen Verfahren ausgeschlossen, wodurch die Rutschkupplung unnötig sein kann.

Hierdurch ist der Aufbau der Antriebseinrichtung ganz besonders einfach und somit wirtschaftlich.

In einer Weiterbildung der Erfindung kann insbesondere vorgesehen sein, dass die Arretiereinrichtung und die Antriebseinrichtung voneinander separiert angeordnet werden.

Die Arretiereinrichtung ist vorzugsweise nicht als Bremsanordnung innerhalb der Antriebseinrichtung, die beispielsweise für die Positionsregelung erforderlich sein kann, ausgebildet. Üblicherweise ist in einer Antriebseinrichtung, die einen Elektromotor umfasst und über eine Lageregelung bzw. Positionsregelung einen Punkt-zu-Punkt-Betrieb durchführt, ohnehin keine Bremsanordnung vorgesehen, da die Drehmomente durch Spannungs- und/oder Stromregelung des Elektromotors erzeugt werden. Sollte allerdings die Antriebseinrichtung eine herkömmliche Bremseinrichtung umfassen, so kann gegebenenfalls vorgesehen sein, dass die erfindungsgemäße Arretiereinrichtung zusätzlich hierzu vorgesehen und als eine hiervon unabhängige Baugruppe ausgebildet ist.

Grundsätzlich kann die Arretiereinrichtung auch innerhalb der Antriebseinrichtung separiert angeordnet sein. Vorzugsweise handelt es sich auch in diesem Fall um voneinander unabhängige Komponenten, die räumlich separiert und/oder funktionell unabhängig sind.

In einer alternativen Ausgestaltung, die nicht bevorzugt ist, kann eine Bremseinrichtung der Antriebseinrichtung verwendet werden. Hierzu ist diese geeignet auszulegen, damit sich die Kurbelwelle bei Einbringen der Schlagkraft nicht verdreht.

In einer Weiterbildung der Erfindung kann ferner vorgesehen sein, dass die Arretiereinrichtung die Kurbelwelle mittelbar arretiert, indem die Arretiereinrichtung eine drehbare Befestigungseinrichtung, vorzugsweise einen Befestigungsflansch bzw. einen Spannflansch der Befestigungseinrichtung, an dem bzw. an der die Kurbelwelle festgelegt ist, arretiert.

An Stelle des Befestigungsflansches oder zusätzlich zu dem Befestigungsflansch kann die Befestigungseinrichtung auch eine Planscheibe oder ein sonstiges Spannmittel umfassen.

Insbesondere kann eine Planscheibe mit mehreren Spannbacken, beispielsweise zwei, drei, vier, fünf, sechs oder mehr Spannbacken, vorgesehen sein. Hierdurch können Kurbelwellentypen mit verschiedenen Durchmessern festgelegt werden.

Üblicherweise ist die Kurbelwelle zu deren Bearbeitung über eine Befestigungseinrichtung an einer Antriebswelle drehbar festgelegt.

Um die Kurbelwelle in ihrer Schlagposition zu arretieren, kann die Arretiereinrichtung grundsätzlich an einer beliebigen Position angreifen, die mechanisch mit der Antriebseinrichtung bzw. mit der Kurbelwelle gekoppelt ist. Beispielsweise kann die Arretiereinrichtung an der Kurbelwelle selbst angreifen, innerhalb der Antriebseinrichtung z. B. an der Antriebswelle angreifen, außerhalb der Antriebseinrichtung z. B. an der Antriebswelle angreifen oder besonders bevorzugt an der Befestigungseinrichtung, insbesondere einem Befestigungsflansch oder einer Planscheibe bzw. einem sonstigen Spannmittel, angreifen.

In einer Weiterbildung kann insbesondere vorgesehen sein, dass die Arretiereinrichtung im Bereich eines Außenumfangs an der Befestigungseinrichtung bzw. an dem Befestigungsflansch bzw. an der Planscheibe bzw. an dem Spannflansch angreift.

Dadurch, dass die Arretiereinrichtung im Bereich eines Außenumfangs einer Scheibe oder Welle angreift, können die anzusetzenden bzw. notwendigen Arretierkräfte geringer ausfallen. Abhängig von der radialen Position der Arretiereinrichtung, bezogen auf die Drehachse der Antriebswelle, wird entsprechend weniger Kraft benötigt, um ein Torsionsmoment zu blocken, je größer der radiale Abstand zu der Drehachse ist. Besonders vorteilhaft ist es dabei, wenn die Arretiereinrichtung erst dann angreift, wenn die Kurbelwelle bereits in der Schlagposition still steht.

Grundsätzlich kann die Arretiereinrichtung auch an mehreren Stellen innerhalb der Vorrichtung angreifen. Beispielsweise kann vorgesehen sein, dass die Arretiereinrichtung an jeweils einer geeigneten Stelle im Bereich beider Enden der Kurbelwelle, beispielsweise an dort befindlichen Befestigungsflanschen, angreift.

Es kann auch eine Abstützung in der Art eines Reitstocks vorgesehen sein, um die Kurbelwelle an ihrem von der Antriebseinrichtung abgewandten Ende drehbar abzustützen bzw. festzulegen.

Die Arretiereinrichtung kann dann beispielsweise im Bereich der Antriebseinrichtung bzw. Antriebswelle und/oder im Bereich der Abstützung abgreifen. Vorzugsweise greift die Arretiereinrichtung auch in diesem Fall an der Befestigungseinrichtung, vorzugsweise einem Befestigungsflansch, wie beschrieben, an.

In einer Weiterbildung der Erfindung kann vorgesehen sein, dass die Arretiereinrichtung ausgebildet ist, um eine Drehung der Kurbelwelle entgegen und/oder in Drehrichtung der Kurbelwelle zu vermeiden.

In einer Weiterbildung kann außerdem vorgesehen sein, dass die Schlagverfestigung derart erfolgt, dass sich die Schlageindrücke eines Schlagkopfes des Schlagwerkzeugs entlang des ringförmig um den Pleuellagerzapfen oder Hauptlagerzapfen umlaufenden jeweiligen Übergangsradius definiert überlappen.

Insbesondere wenn sich die Schlageindrücke eines Schlagkopfes entlang des ringförmig um den Zapfen umlaufenden jeweiligen Übergangsradius überlappen sollen, d. h. wenn die Schlagpositionen eng beabstandet sind, ist es erforderlich die Schlagkraft hochpräzise und gezielt einzubringen. Ohne die erfindungsgemäße Arretiereinrichtung ist dies schwierig, da sich die Kurbelwelle beim Einbringen der Schlagkraft von einer Schlagposition in die vorhergehende Schlagposition zumindest teilweise zurückdrehen würde, wenn der Schlagkopf in den Schlageindruck des vorhergehenden Schlages eindringt. Da sich gezeigt hat, dass durch überlappende Schlageindrücke bzw. eng angeordnete und exakt festgelegte Schlagpositionen eine besonders wirksame Erhöhung der Dauerschwingfestigkeit bzw. Biegewechselfestigkeit und Torsionswechselfestigkeit erzeugen lässt, ist die Erfindung in Kombination mit dem Einbringen von eng gesetzten und/oder präzisen Schlagabständen insbesondere derart, dass sich die Schlageindrücke überlappen bzw. überschneiden, besonders vorteilhaft.

In einer Weiterbildung der Erfindung kann das wenigstens eine Schlagwerkzeug mit einer Periodizität, vorzugsweise mit einer Taktung bzw. Schlagfrequenz von 0,5 Hz bis 30 Hz, besonders bevorzugt mit einer Taktung von 0,5 Hz bis 5 Hz und ganz besonders bevorzugt mit einer Taktung von 0,5 Hz bis 3 Hz, eine Schlagbewegung durchführen bzw. die Schlagkraft einbringen.

Selbstverständlich können auch andere Taktungen, beispielsweise auch Schlagfrequenzen zwischen 0,1 Hz und 50 Hz, vorgesehen sein, die vorgenannten Werte eignen sich jedoch ganz besonders.

Die Schlagdrücke, die von dem Schlagkolben zu der Schlagkraft umgesetzt werden, können - je nach Betrieb - zwischen 10 und 300 bar, bevorzugt zwischen 30 und 180 bar, und besonders bevorzugt zwischen 50 und 130 bar, betragen.

Die Temperatur im Bereich des zu bearbeitenden Kurbelwellensegments bzw. Übergangsradius sollte vorzugsweise nicht höher als 65°C liegen; bevorzugt werden Werte zwischen 12°C und 25°C.

Die Erfahrung hat gezeigt, dass Kurbelwellen nach dynamischer Beanspruchung im Motor oder auf dem Prüfstand nicht ausbreitungsfähige Mikrorisse an den Oberflächen bekommen können. Auf die Dauerfestigkeitseigenschaften haben diese Mikrorisse keine Auswirkung, aber sie können das optische Erscheinungsbild stören.

Da die Einbringung von Druckeigenspannung vorzugsweise bis zu einer Tiefe von 15 mm, aber auch noch tiefer erfolgen kann, bedeutet dies, im Oberflächenbereich der Kurbelwelle kann eine Abtragung von einigen Millimetern, zum Beispiel von 0,1 bis 3 mm, vorzugsweise 0,5 mm, erfolgen, ohne dass die Biege- und Torsionswechselfestigkeit oder die Dauerschwingfestigkeit der Kurbelwelle leidet.

Untersuchungen haben gezeigt, dass derartige Maßnahmen die Dauerfestigkeit sogar geringfügig erhöhen können, beispielsweise um bis zu 5%.

Die Abtragung der Oberfläche kann auf verschiedene Weise erfolgen, wie zum Beispiel durch Schleifen, Drehen, Fräsen, Drehfräsen, Schälen oder Polieren.

Die Erfindung betrifft auch eine Vorrichtung zum Schlagverfestigen von Übergangsradien einer Kurbelwelle, insbesondere von Übergangsradien zwischen Pleuellagerzapfen und Kurbelwange und/oder Übergangsradien zwischen Hauptlagerzapfen und den Kurbelwangen der Kurbelwelle, mit einer Antriebseinrichtung, um die Kurbelwelle in eine Schlagposition zu drehen. Erfindungsgemäß ist eine Arretiereinrichtung vorgesehen, um die Kurbelwelle in der Schlagposition zu arretieren, wobei weiter wenigstens ein Schlagwerkzeug vorgesehen ist, um in der Schlagposition eine Schlagkraft in wenigstens einen Übergangsradius einzubringen.

Die Vorrichtung eignet sich auch zur Schlagverfestigung von Übergängen zu Flanschen, Zapfen und sonstigen geometrischen Querschnittsveränderungen - sowohl für tangierende wie hinterlegte Radien.

Merkmale, die bereits im Zusammenhang mit dem erfindungsgemäßen Verfahren beschrieben wurden, sind selbstverständlich auch für die erfindungsgemäße Vorrichtung vorteilhaft umsetzbar - und umgekehrt. Ferner können Vorteile, die bereits im Zusammenhang mit dem erfindungsgemäßen Verfahren genannt wurden, auch auf die erfindungsgemäße Vorrichtung bezogen verstanden werden - und umgekehrt.

Es kann vorgesehen sein, dass zwei Schlagwerkzeuge in einer gemeinsamen Schlageinrichtung verwendet werden, die Schlagkräfte in beide Übergangsradien eines Pleuellagerzapfens oder eines Hauptlagerzapfens gleichzeitig einbringen. Die Schlagwerkzeuge können über eine Umlenkeinheit gekoppelt sein und somit vorzugsweise von einem gemeinsamen Schlagkolben betrieben werden.

Es können auch mehrere unabhängig voneinander verwendbare Schlagwerkzeuge (beispielsweise durch Verwenden mehrere Schlageinrichtungen mit jeweils einem oder mehreren Schlagwerkzeugen) vorgesehen sein, die eine jeweilige Schlagkraft in beliebige Übergangsradien der Kurbelwelle einzubringen vermögen, wobei eine entsprechende Synchronisierung untereinander bzw. zwischen den Steuerungen der Antriebseinrichtung und/oder Arretiereinrichtung und/oder weiterer Schlagwerkzeuge vorgesehen sein kann.

Es kann auch vorgesehen sein, dass lediglich ein Schlagwerkzeug verwendet wird.

Insbesondere bei Verwendung mehrerer Schlagwerkzeuge kann eine gemeinsame Druckimpulsvorrichtung vorgesehen sein, die die entsprechenden Schlagkräfte für die Schlagwerkzeuge auf hydraulische, pneumatische, mechanische und/oder elektrische Weise (gemeinsam oder individuell) für die Schlagwerkzeuge zu erzeugen vermag.

In einer Weiterbildung der Erfindung kann vorgesehen sein, dass die Antriebseinrichtung und die Arretiereinrichtung voneinander separiert ausgebildet und angeordnet sind.

In einer Weiterbildung kann ferner eine drehbare Befestigungseinrichtung vorgesehen sein, um die Kurbelwelle festzulegen, wobei die Arretiereinrichtung angeordnet und ausgebildet ist, um die Befestigungseinrichtung für die Kurbelwelle zu arretieren.

In einer Weiterbildung der Erfindung kann des Weiteren vorgesehen sein, dass die Befestigungseinrichtung einen Befestigungsflansch aufweist, welcher durch die Arretiereinrichtung arretierbar ist, vorzugsweise derart, dass die Arretiereinrichtung im Bereich eines Außenumfangs an dem Befestigungsflansch angreift.

In einer Weiterbildung kann auch vorgesehen sein, dass die Antriebseinrichtung angeordnet und ausgebildet ist, um die Befestigungseinrichtung zu drehen, vorzugsweise um eine Eingangswelle der Befestigungseinrichtung zu drehen. Bei der Eingangswelle der Befestigungseinrichtung kann es sich um eine Ausgangswelle der Antriebeinrichtung, z. B. eines Elektromotors, handeln.

Die Befestigungseinrichtung kann vorzugsweise zwischen einer Ausgangswelle der Antriebseinrichtung und der Kurbelwelle angeordnet sein.

In einer Weiterbildung der Erfindung kann eine Steuer- und/oder Regeleinrichtung, vorzugsweise umfassend einen Mikroprozessor, vorgesehen sein, um die Drehbewegung der Antriebseinrichtung und/oder die Steuerung der Arretiereinrichtung und/oder die Steuerung des wenigstens einen Schlagwerkzeugs zu realisieren und/oder zu synchronisieren.

Es kann eine Steuer- und/oder Regeleinrichtung vorgesehen sein, die die Steuerungen der Arretiereinrichtung, der Antriebseinrichtung und/oder des wenigstens einen Schlagwerkzeugs umfasst.

Anstelle eines Mikroprozessors kann auch eine beliebig weitere Einrichtung zur Implementierung einer Steuer- und/oder Regeleinrichtung vorgesehen sein, beispielsweise eine oder mehrere Anordnungen diskreter elektrischer Bauteile auf einer Leiterplatte, eine speicherprogrammierbare Steuerung (SPS), eine anwendungsspezifische integrierte Schaltung (ASIC) oder eine sonstige programmierbare Schaltung, beispielsweise auch ein Field Programmable Gate Array (FPGA), eine programmierbare logische Anordnung (PLA) und/oder ein handelsüblicher Computer.

Die Erfindung betrifft auch ein Computerprogramm mit Programmcodemitteln, um ein vorstehend beschriebenes Verfahren durchzuführen, wenn das Programm auf einer Steuer- und/oder Regeleinrichtung, insbesondere auf einem Mikroprozessor, ausgeführt wird.

Einige der Komponenten der erfindungsgemäßen Vorrichtung können grundsätzlich in ihrem Aufbau der Vorrichtung nach der EP 1 716 260 B1 entsprechen.

Nachfolgend werden Ausführungsbeispiele der Erfindung anhand der Zeichnung näher beschrieben.

In den Figuren sind funktionsgleiche Elemente mit denselben Bezugszeichen versehen.

Es zeigen schematisch:
- Fig. 1: eine Gesamtansicht einer erfindungsgemäßen Vorrichtung zur Durchführung des Verfahrens in einer ersten Ausführung;
- Fig. 2: einen Ablaufplan des erfindungsgemäßen Verfahrens;
- Fig. 3: eine perspektivische Ansicht eines Teils der erfindungsgemäßen Vorrichtung zur Durchführung des Verfahrens in einer zweiten Ausführung;
- Fig. 4: eine Schlageinrichtung mit zwei Schlagwerkzeugen in vergrößerter Darstellung gemäß Einzelheit "A" aus Fig. 1;
- Fig. 5: eine Schlageinrichtung mit nur einem Schlagwerkzeug; und
- Fig. 6: einen schlagverfestigten Übergangsradius, bei dem sich Schlageindrücke eines Schlagkopfes entlang des ringförmig umlaufenden Übergangsradius überlappen.

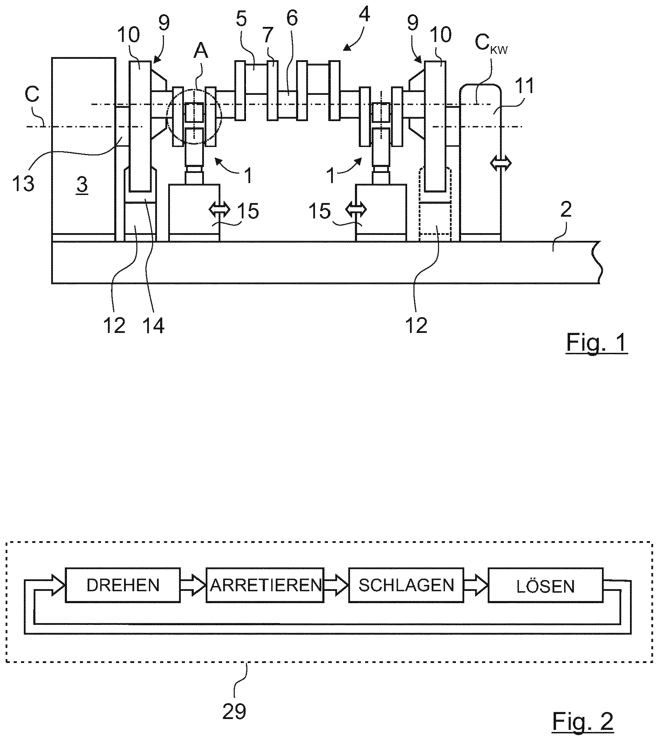

Die in Figur 1 in einer Gesamtansicht dargestellte Vorrichtung entspricht grundsätzlich in ihrem Aufbau den Vorrichtungen nach der DE 34 38 742 C2 und EP 1 716 260 B1 mit einer oder mehreren Schlageinrichtungen 1, weshalb nachfolgend nur auf die wesentlichen Teile und auf die Unterschiede zum Stand der Technik näher eingegangen wird.

Die Vorrichtung weist ein Maschinenbett 2 und eine Antriebseinrichtung 3 auf. Die Antriebseinrichtung 3 wird dazu verwendet, eine Kurbelwelle 4 entlang einer Drehrichtung in eine Schlagposition zu bringen bzw. zu drehen.

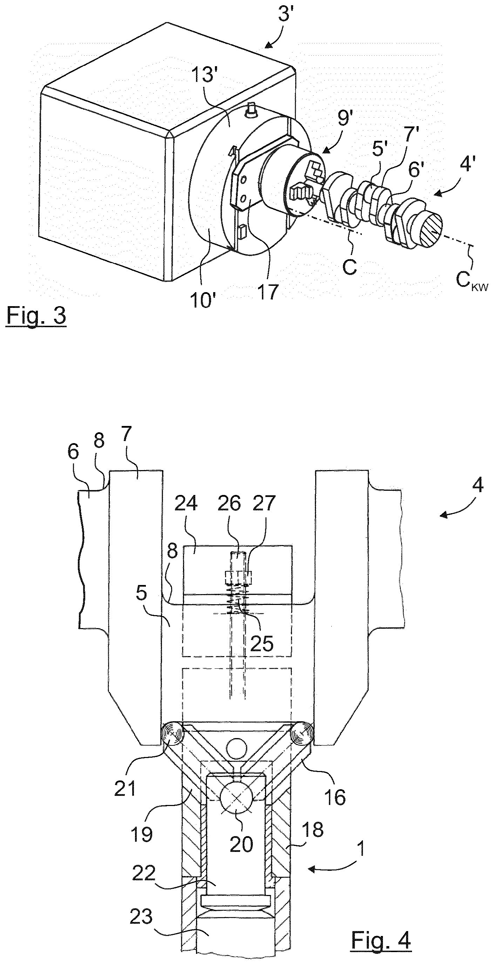

Die Kurbelwelle 4 weist Pleuellagerzapfen 5 und Hauptlagerzapfen 6, zwischen denen jeweils Kurbelwangen 7 angeordnet sind, auf. Zwischen Pleuellagerzapfen 5 und Kurbelwangen 7 sowie zwischen Hauptlagerzapfen 6 und Kurbelwangen 7 bzw. allgemein zwischen Querschnittsübergängen der Kurbelwelle 4 sind Übergangsradien 8 (vgl. Figuren 4 bis 6) ausgebildet.

An der der Antriebseinrichtung 3 zugewandten Seite der Kurbelwelle 4 ist eine Befestigungseinrichtung 9 vorgesehen, die eine Spannscheibe bzw. einen Befestigungsflansch 10 aufweist. Auf der der Antriebseinrichtung 3 abgewandten Seite der Kurbelwelle 4 ist eine Abstützung 11 vorzugsweise in der Art eines Reitstocks vorgesehen, die eine weitere Befestigungseinrichtung 9 aufweist, um die Kurbelwelle 4 drehbar aufzunehmen bzw. drehbar festzulegen. Optional oder ergänzend zur Abstützung 11 kann eine Lünette, die an einer rotationssymmetrischen Stelle positioniert wird, vorgesehen sein.

Erfindungsgemäß ist eine Arretiereinrichtung 12 vorgesehen, die im Bereich eines Außenumfangs der Befestigungseinrichtung 9 angreift. Grundsätzlich kann die Arretiereinrichtung 12 an einer beliebigen Stelle innerhalb der Vorrichtung angeordnet sein, um eine Arretierkraft auf eine Ausgangswelle der Antriebseinrichtung 3 bzw. eine vorliegend hiermit identische Eingangswelle 13 der Befestigungseinrichtung 9 und somit auf die Kurbelwelle 4 aufzubringen. Die Arretiereinrichtung 12 kann auch an mehreren Stellen der Vorrichtung angreifen. Beispielhaft ist ein zweiter Teil der Arretiereinrichtung 12 in Eingriff mit der Befestigungseinrichtung 9 im Bereich der Abstützung 11 gestrichelt dargestellt.

Die Arretiereinrichtung 12 basiert beispielsweise auf einer kraftschlüssigen Arretierung unter Verwendung einer nur schematisch dargestellten Bremsbackenanordnung 14.

Die Antriebseinrichtung 3 vermag die Kurbelwelle 4 entlang einer Drehachse C in eine Drehbewegung zu versetzen. Dabei kann vorgesehen sein, dass die Hauptdrehachse C_{KW} der Kurbelwelle 4 außermittig von der Drehachse C der Antriebseinrichtung 3 positioniert ist, wie in Figur 1 und Figur 3 dargestellt. Hierzu können vorzugsweise Ausrichtungsmittel 17 (vgl. Figur 3) im Bereich der Befestigungseinrichtung 9 vorgesehen sein. Dabei kann vorgesehen sein, dass die Ausrichtungsmittel 17 eine Mittelachse des jeweils zu verfestigenden Zapfens 5, 5', 6, 6' so verschieben, dass die Mittelachse des Zapfens 5, 5', 6, 6' auf der Drehachse C liegt.

Für die Antriebseinrichtung 3 ist insbesondere ein Direktantrieb, vorzugsweise ohne Kupplung, vorgesehen. Ein Motor, vorzugsweise ein Elektromotor, der Antriebseinrichtung 3 kann somit ohne Übersetzung bzw. Getriebe mit der Befestigungseinrichtung 9 bzw. mit der Kurbelwelle 4 mechanisch gekoppelt sein.

Die nachfolgend noch beispielhaft näher beschriebenen Schlageinrichtungen 1 sind jeweils in einer Verschiebe- und Justiereinrichtung 15 justierbar gehalten, um sie an die Lage der Pleuellagerzapfen 5 und der Hauptlagerzapfen 6 und an die Länge der Kurbelwelle 4 anzupassen.

Auch die Abstützung 11 kann verschiebbar eingerichtet sein, wie durch die Doppelpfeile in Figur 1 angedeutet.

In der Figur 1 sind zwei Schlageinrichtungen 1 dargestellt, grundsätzlich kann aber eine beliebige Anzahl von Schlageinrichtungen 1 vorgesehen sein, beispielsweise auch nur eine einzige Schlageinrichtung 1.

In Figur 2 ist das Verfahren, das grundsätzlich aus vier Schritten (Drehen, Arretieren, Schlagen, Lösen) besteht, abgebildet.

Für den Betrieb der Antriebseinrichtung 3, die vorzugsweise einen Elektromotor umfasst, kann eine Lageregelung verwendet werden, um die Kurbelwelle 4 in die jeweilige Schlagposition zu drehen, wonach die Kurbelwelle 4 vorzugsweise schrittweise bzw. getaktet gedreht wird.

Nachdem die Kurbelwelle 4 von der Antriebseinrichtung 3 in die Schlagposition gedreht wurde, wird die Kurbelwelle 4 von der Arretiereinrichtung 12 zunächst in der Schlagposition arretiert.

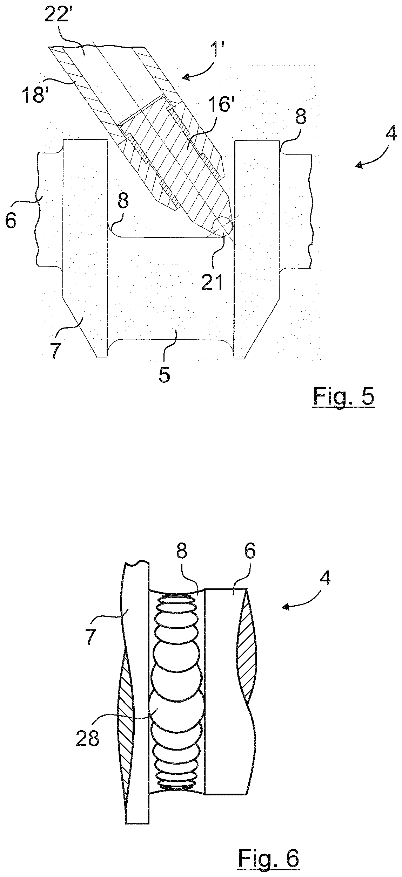

Anschließend wird durch wenigstens ein Schlagwerkzeug 16 (vgl. Figur 4 und Figur 5) eine Schlagkraft in wenigstens einen Übergangsradius 8 der Kurbelwelle 4 eingebracht.

Vorzugsweise sind die Steuerung der Antriebseinrichtung 3 und die Steuerung der Arretiereinrichtung 12 miteinander synchronisiert, derart, dass die Arretiereinrichtung 12 die Kurbelwelle 4 erst dann arretiert, wenn die Kurbelwelle 4 in der Schlagposition stillsteht.

Ferner können auch die Steuerungen der Arretiereinrichtung 12 und des wenigstens einen Schlagwerkzeugs 16 (bzw. der wenigstens einen Schlageinrichtung 1) synchronisiert sein, derart, dass das wenigstens eine Schlagwerkzeug 16 die Schlagkraft erst dann in den Übergangsradius 8 der Kurbelwelle 4 einbringt, wenn die Kurbelwelle 4 in der Schlagposition arretiert ist. Anschließend wird die Arretierung der Kurbelwelle 4 wieder gelöst.

Das Verfahren kann anschließend entlang eines Übergangsradius 8 beliebig oft wiederholt werden, vorzugsweise für eine vollständige Umdrehung entlang des Umfangs des Übergangsradius 8 bzw. entlang des ringförmig umlaufenden Übergangsradius 8. Es kann auch mehr als eine Umdrehung vorgesehen sein, beispielsweise 2 oder 3 Umdrehungen. Es muss aber keine volle Umdrehung stattfinden.

Nachdem ein Übergangsradius 8 in gewünschter Weise schlagverfestigt wurde, kann das Schlagwerkzeug 16 bzw. die gesamte Schlageinrichtung 1 an den als nächstes zu verfestigenden Übergangsradius 8 bewegt werden, wonach das Verfahren (Drehen, Arretieren, Schlagen, Lösen) entlang des ringförmig um den Zapfen umlaufenden nächsten Übergangsradius 8 wiederholt werden kann.

Das wenigstens eine Schlagwerkzeug 16 bzw. die wenigstens eine Schlageinrichtung 1 kann die Schlagbewegung bzw. die Schlagkraft mit einer Periodizität, beispielsweise mit einer Taktung von 0,1 Hz bis 50 Hz, vorzugsweise mit einer Taktung von 0,3 Hz bis 10 Hz, besonders bevorzugt mit einer Taktung von 0,5 Hz bis 5 Hz und ganz besonders bevorzugt mit einer Taktung von 0,5 Hz bis 3 Hz, einbringen.

Zur Durchführung des Verfahrens kann eine Steuer- und/oder Regeleinrichtung 29, vorzugsweise umfassend einen Mikroprozessor, vorgesehen sein. Die Steuer- und/oder Regeleinrichtung 29 kann beispielsweise auch die Steuerungen der Antriebseinrichtung 3, der Arretiereinrichtung 12 und/oder des wenigstens einen Schlagwerkzeugs 16 umfassen bzw. implementieren und/oder synchronisieren.

Insbesondere kann ein Computerprogramm mit Programmcodemitteln vorgesehen sein, um das erfindungsgemäße Verfahren durchzuführen, wenn das Programm auf einer Steuer- und/oder Regeleinrichtung 29, insbesondere auf einem Mikroprozessor, ausgeführt wird.

In Figur 3 ist in perspektivischer Ansicht ausschnittsweise eine weitere Vorrichtung zur Durchführung des erfindungsgemäßen Verfahrens - allerdings ohne Schlageinrichtung - dargestellt. Die Vorrichtung der Figur 3 ist dabei im Wesentlichen identisch mit der Vorrichtung der Figur 1, weshalb nachfolgend nur auf die wesentlichen Unterschiede Bezug genommen wird.

Abermals ist eine Antriebseinrichtung 3' vorgesehen. In der Ausführungsform der Figur 3 ist die Arretiereinrichtung allerdings (nicht sichtbar) innerhalb der Antriebseinrichtung 3' angeordnet. Obwohl die Arretiereinrichtung vorzugsweise wie in der Figur 1 dargestellt angeordnet ist, kann die Arretiereinrichtung also auch innerhalb der Antriebseinrichtung 3' aufgenommen sein. Dabei ist allerdings dennoch vorgesehen, dass die Arretiereinrichtung separat von der Antriebseinrichtung 3' ansteuerbar ist. Die Arretiereinrichtung ist gemäß Figur 3 nicht Bestandteil der Antriebseinrichtung 3'. Die Antriebseinrichtung 3' kann gegebenenfalls zusätzlich über eine eigene Bremseinrichtung verfügen.

Ferner ist eine Befestigungseinrichtung 9' vorgesehen, die einen Befestigungsflansch 10' und eine daran befestigte Planscheibe mit Spannbacken zur Festlegung der Kurbelwelle 4' aufweist. Die Planscheibe mit den Spannbacken der Befestigungseinrichtung 9' ist an dem Befestigungsflansch 10' verstellbar an einem Ausrichtungsmittel 17 angeordnet, wodurch sich die Längsachse C_{Kw} der Kurbelwelle 4' relativ zu der Drehachse C der Antriebswelle 13' verschieben lässt.

Die Kurbelwelle 4' der Figur 3 weist eine von der Kurbelwelle 4 der Figur 1 abweichende Konfiguration auf, umfasst aber grundsätzlich ebenfalls Pleuellagerzapfen 5', Hauptlagerzapfen 6' und Kurbelwangen 7'.

In Figur 3 (wie auch in Figur 1) kann an dem von der Antriebseinrichtung 3 abgewandten Ende der Kurbelwelle 4 eine weitere Befestigungseinrichtung 9, 9' vorgesehen sein, diese kann jedoch auch entfallen.

In Figur 4 ist beispielhaft eine Schlageinrichtung 1 der Figur 1 näher dargestellt. Die Erfindung kann grundsätzlich mit einer beliebigen Schlageinrichtung 1 umgesetzt werden. Die nachfolgend beschriebene Schlageinrichtung 1 eignet sich jedoch besonders. Sie weist einen Grundkörper 18 auf, der entsprechend dem Radius des zu bearbeitenden Kurbelwellensegments mit einer prismatischen Anlage versehen sein kann und vorzugsweise Führungen 19 aufweist, die zwei Schlagwerkzeuge 16 in deren Abstützebene führen und ihnen im Abstützwinkel um eine Umlenkeinheit 20 eine entsprechende Freiheit geben, die zur Anpassung an die maßlichen Verhältnisse der Kurbelwelle 4 vorteilhaft ist. An den vorderen Enden der beiden Schlagwerkzeuge 16 ist jeweils eine Kugel als Schlagkopf 21 angeordnet. Ein Zwischenteil 22 stellt die Verbindung zwischen einem Schlagkolben 23 und der Umlenkeinheit 20, die die Schlagenergie an die Schlagwerkzeuge 16 weitergibt, her. Das Zwischenteil 22 kann ggf. auch entfallen.

Zur Steigerung der Wirksamkeit des Schlages kann auf der von dem Grundkörper 18 abgewandten Seite des Zapfens 5, 6 ein Spannprisma 24 über Federn 25 mit einstellbaren Spannbolzen 26 mit Spannmuttern 27 befestigt werden. Hier sind auch andere konstruktive Lösungen möglich.

Durch Anordnung mehrerer Schlageinrichtungen 1 über die Länge der zu bearbeitenden Kurbelwelle 4 können im Bedarfsfall alle zentrisch und gegebenenfalls exzentrisch verlaufenden Bereiche der Kurbelwelle 4 gleichzeitig bearbeitet werden.

Aus der Figur 5 ist eine Schlageinrichtung 1' ersichtlich, die mit nur einem Schlagwerkzeug 16' versehen ist. In dem gezeigten Ausführungsbeispiel ist die Schlageinrichtung 1' zur Kurbelwelle 4 vorzugsweise schräg gestellt, und zwar derart, dass das Schlagwerkzeug 16', das koaxial zur Längsachse der Schlageinrichtung 1' angeordnet ist, senkrecht auf den Bereich des zu bearbeitenden Kurbelwellensegments, vorliegend des zu bearbeitenden Übergangsradius 8, auftrifft. In diesem Fall lässt sich zwar jeweils nur ein Kurbelwellensegment bearbeiten, aber andererseits ist die konstruktive Ausgestaltung und die Kraftübertragung der Schlageinrichtung 1' hierfür besser und einfacher. Zusätzlich können Bohrungsenden mit diesem Werkzeug stehend verfestigt werden.

Besonders vorteilhaft erweist sich diese Ausgestaltung für die Anwendung an nicht symmetrischen Kurbelwellensegmenten, wie den Endbereichen und den Ölbohrungsenden der Kurbelwelle 4, 4'.

In Figur 6 ist ein beispielhafter Übergangsradius 8 zwischen dem Hauptlagerzapfen 6 und einer Kurbelwange 7 dargestellt, bei dem die Schlagverfestigung derart erfolgt ist, dass sich die Schlageindrücke 28 eines Schlagkopfes 21 des Schlagwerkzeugs 16, 16' entlang des ringförmig um einen Hauptlagerzapfen 6 umlaufenden Übergangsradius 8 überlappen.

Um diese Art der Schlagverfestigung zu erreichen, ist ein hochpräzises Arbeiten bzw. Betreiben der Vorrichtung notwendig.

Insbesondere wenn die Schlagabstände eng gesetzt werden, dringt der Schlagkopf 21 bei einem nachfolgenden Schlag zumindest teilweise in den Schlageindruck 28 des vorhergehenden Schlages ein, wodurch die Schlagkraft eine rückstellende Drehwirkung auf die Kurbelwelle 4, 4' ausüben kann. Die Arretiereinrichtung 12 kann ausgebildet sein, eine derartige Drehbewegung zu verhindern. Es kann insbesondere von Vorteil sein, dass die Arretiereinrichtung 12 ausgebildet ist, um eine Drehung der Kurbelwelle 4, 4' entgegen der Drehrichtung der Antriebseinrichtung 3, 3' zu vermeiden.

Es kann auch vorgesehen sein, dass wenigstens eine Schlageinrichtung 1 zur Schlagverfestigung der Übergangsradien 8 der Hauptlagerzapfen 6 ausgebildet und eingerichtet ist und eine Schlageinrichtung 1 zum Schlagverfestigen der Übergangsradien 8 der Pleuellagerzapfen ausgebildet und eingerichtet ist.

## Patentansprüche

1. Verfahren zum Schlagverfestigen von Übergangsradien (8) einer Kurbelwelle (4, 4'), insbesondere von Übergangsradien (8) zwischen Pleuellagerzapfen (5, 5') und Kurbelwangen (7, 7') und/oder Übergangsradien (8) zwischen Hauptlagerzapfen (6, 6') und den Kurbelwangen (7, 7') der Kurbelwelle (4, 4'), wonach die Kurbelwelle (4, 4') mittels einer Antriebseinrichtung (3, 3') zunächst entlang einer Drehrichtung in eine Schlagposition gedreht wird,
**dadurch gekennzeichnet, dass**
eine Arretiereinrichtung (12) vorgesehen ist, um die Kurbelwelle (4, 4') in der Schlagposition zu arretieren, wonach durch wenigstens ein Schlagwerkzeug (16, 16') eine Schlagkraft in wenigstens einen Übergangsradius (8) eingebracht wird.

2. Verfahren nach Anspruch 1,
**dadurch gekennzeichnet, dass**
für den Betrieb der Antriebseinrichtung (3, 3') eine Lageregelung verwendet wird, um die Kurbelwelle (4, 4') in die Schlagposition zu drehen, wonach die Kurbelwelle (4, 4') vorzugsweise schrittweise bzw. getaktet gedreht wird.

3. Verfahren nach Anspruch 1 oder 2,
**dadurch gekennzeichnet, dass**
die Steuerung der Antriebseinrichtung (3, 3') und die Steuerung der Arretiereinrichtung (12) miteinander synchronisiert werden derart, dass die Arretiereinrichtung (12) die Kurbelwelle (4, 4') erst dann arretiert, wenn die Kurbelwelle (4, 4') in der Schlagposition stillsteht.

4. Verfahren nach einem der Ansprüche 1 bis 3,
**dadurch gekennzeichnet, dass**
die Steuerung der Arretiereinrichtung (12) und die Steuerung des wenigstens einen Schlagwerkzeugs (16, 16') miteinander synchronisiert werden derart, dass das wenigstens eine Schlagwerkzeug (16, 16') die Schlagkraft erst dann in den wenigstens einen Übergangsradius (8) der Kurbelwelle (4, 4') einbringt, wenn die Kurbelwelle (4, 4') in der Schlagposition arretiert ist.

5. Verfahren nach einem der Ansprüche 1 bis 4,
**dadurch gekennzeichnet, dass**
die Antriebseinrichtung (3, 3') als Direktantrieb, vorzugsweise ohne Kupplung, ausgebildet wird.

6. Verfahren nach einem der Ansprüche 1 bis 5,
**dadurch gekennzeichnet, dass**
die Arretiereinrichtung (12) die Kurbelwelle (4, 4') mittelbar arretiert, indem die Arretiereinrichtung (12) eine drehbare Befestigungseinrichtung (9, 9'), vorzugsweise einen Befestigungsflansch (10, 10') der Befestigungseinrichtung (9, 9'), an dem bzw. an der die Kurbelwelle (4, 4') festgelegt ist, arretiert.

7. Verfahren nach einem der Ansprüche 1 bis 6,
**dadurch gekennzeichnet, dass**
die Arretiereinrichtung (12) ausgebildet ist, um eine Drehung der Kurbelwelle (4, 4') entgegen und/oder in Drehrichtung der Kurbelwelle (4, 4') zu vermeiden.

8. Verfahren nach einem der Ansprüche 1 bis 7,
**dadurch gekennzeichnet, dass**
die Schlagverfestigung derart erfolgt, dass sich die Schlageindrücke (28) eines Schlagkopfes (21) des Schlagwerkzeugs (16, 16') entlang des ringförmig um den Pleuellagerzapfen (5, 5') und/oder Hauptlagerzapfen (6, 6') umlaufenden jeweiligen Übergangsradius (8) definiert überlappen.

9. Verfahren nach einem der Ansprüche 1 bis 8,
**dadurch gekennzeichnet, dass**
das wenigstens eine Schlagwerkzeug (16, 16') mit einer Periodizität, vorzugsweise mit einer Taktung von 0,1 Hz bis 50 Hz, besonders bevorzugt mit einer Taktung von 0,5 Hz bis 5 Hz und ganz besonders bevorzugt mit einer Taktung von 0,5 Hz bis 3 Hz eine Schlagbewegung durchführt bzw. die Schlagkraft einbringt.

10. Vorrichtung zum Schlagverfestigen von Übergangsradien (8) einer Kurbelwelle (4, 4'), insbesondere von Übergangsradien (8) zwischen Pleuellagerzapfen (5, 5') und Kurbelwangen (7, 7') und/oder Übergangsradien (8) zwischen Hauptlagerzapfen (6, 6') und den Kurbelwangen (7, 7') der Kurbelwelle (4, 4'), mit einer Antriebseinrichtung (3, 3'), um die Kurbelwelle (4, 4') in eine Schlagposition zu drehen,
**dadurch gekennzeichnet, dass**
eine Arretiereinrichtung (12) vorgesehen ist, um die Kurbelwelle (4, 4') in der Schlagposition zu arretieren, wobei weiter wenigstens ein Schlagwerkzeug (16, 16') vorgesehen ist, um in der Schlagposition eine Schlagkraft in wenigstens einen Übergangsradius (8) einzubringen.

11. Vorrichtung nach Anspruch 10,
**dadurch gekennzeichnet, dass**
die Antriebseinrichtung (3, 3') und die Arretiereinrichtung (12) voneinander separiert ausgebildet und angeordnet sind.

12. Vorrichtung nach Anspruch 10 oder 11,
**dadurch gekennzeichnet, dass**
eine drehbare Befestigungseinrichtung (9, 9') vorgesehen ist, um die Kurbelwelle (4, 4') festzulegen, wobei die Arretiereinrichtung (12) angeordnet und ausgebildet ist, um die Befestigungseinrichtung (9, 9') für die Kurbelwelle (4, 4') zu arretieren.

13. Vorrichtung nach Anspruch 12,
**dadurch gekennzeichnet, dass**
die Befestigungseinrichtung (9, 9') einen Befestigungsflansch (10, 10') aufweist, welcher durch die Arretiereinrichtung (12) arretierbar ist, vorzugsweise derart, dass die Arretiereinrichtung (12) im Bereich eines Außenumfangs an dem Befestigungsflansch angreift.

14. Vorrichtung nach einem der Ansprüche 10 bis 13,
**dadurch gekennzeichnet, dass**
eine Steuer- und/oder Regeleinrichtung (29), vorzugsweise umfassend einen Mikroprozessor, vorgesehen ist, um die Drehbewegung der Antriebseinrichtung (3, 3') und/oder die Steuerung der Arretiereinrichtung (12) und/oder die Steuerung des wenigstens einen Schlagwerkzeugs (16, 16') zu realisieren und/oder zu synchronisieren.

15. Computerprogramm mit Programmcodemitteln, die Bewirken, dass die Vorrichtung gemäß einem der Ansprüche 10-14 das Verfahren gemäß einem der Ansprüche 1 bis 9 durchführt, insbesondere wenn das Programm auf einer Steuer- und/oder Regeleinrichtung (29), insbesondere auf einem Mikroprozessor, ausgeführt wird.

## Claims

1. A method for the impact hardening of transition radii (8) of a crankshaft (4, 4'), in particular of transition radii (8) between connecting-rod bearing journals (5, 5') and crank webs (7, 7') and/or transition radii (8) between main bearing journals (6, 6') and the crank webs (7, 7') of the crankshaft (4, 4'), wherein the crankshaft (4, 4') is firstly rotated by means of a drive device (3, 3') along a direction of rotation into an impact position,
**characterized in that**
an arresting device (12) is provided in order to arrest the crankshaft (4, 4') in the impact position, following which an impact force is introduced into at least one transition radius (8) by means of at least one impact tool (16, 16').

2. The method as claimed in claim 1,
**characterized in that**
for the operation of the drive device (3, 3'), closed-loop position control is used in order to rotate the crankshaft (4, 4') into the impact position, wherein the crankshaft (4, 4') is rotated preferably in stepped or clocked fashion.

3. The method as claimed in claim 1 or 2,
**characterized in that**
the controller of the drive device (3, 3') and the controller of the arresting device (12) are synchronized with one another such that the arresting device (12) arrests the crankshaft (4, 4') only when the crankshaft (4, 4') is at a standstill in the impact position.

4. The method as claimed in any of claims 1 to 3,
**characterized in that**
the controller of the arresting device (12) and the controller of the at least one impact tool (16, 16') are synchronized with one another such that the at least one impact tool (16, 16') introduces the impact force into the at least one transition radius (8) of the crankshaft (4, 4') only when the crankshaft (4, 4') has been arrested in the impact position.

5. The method as claimed in any of claims 1 to 4,
**characterized in that**
the drive device (3, 3') is designed as a direct drive, preferably without a clutch.

6. The method as claimed in any of claims 1 to 5,
**characterized in that**
the arresting device (12) arrests the crankshaft (4, 4') indirectly by virtue of the arresting device (12) arresting a rotatable fastening device (9, 9'), preferably a fastening flange (10, 10') of the fastening device (9, 9'), to which fastening flange or fastening device the crankshaft (4, 4') is fixed.

7. The method as claimed in any of claims 1 to 6,
**characterized in that**
the arresting device (12) is designed to prevent rotation of the crankshaft (4, 4') counter to and/or in the direction of rotation of the crankshaft (4, 4').

8. The method as claimed in any of claims 1 to 7,
**characterized in that**
the impact hardening is performed in such a way that the impact impressions (28) of an impact head (21) of the impact tool (16, 16') overlap in a defined manner along the respective transition radius (8) running in annularly encircling fashion around the connecting-rod bearing journal (5, 5') and/or main bearing journal (6, 6').

9. The method as claimed in any of claims 1 to 8,
**characterized in that**
the at least one impact tool (16, 16') performs an impact movement or introduces the impact force with a periodicity, preferably with a timing of 0.1 Hz to 50 Hz, particularly preferably with a timing of 0.5 Hz to 5 Hz and very particularly preferably with a timing of 0.5 Hz to 3 Hz.

10. An apparatus for the impact hardening of transition radii (8) of a crankshaft (4, 4'), in particular of transition radii (8) between connecting-rod bearing journals (5, 5') and crank webs (7, 7') and/or transition radii (8) between main bearing journals (6, 6') and the crank webs (7, 7') of the crankshaft (4, 4'), having a drive device (3, 3') for rotating the crankshaft (4, 4') into an impact position,
**characterized in that**
an arresting device (12) is provided in order to arrest the crankshaft (4, 4') in the impact position, wherein, furthermore, at least one impact tool (16, 16') is provided in order to introduce an impact force into at least one transition radius (8) in the impact position.

11. The apparatus as claimed in claim 10,
**characterized in that**
the drive device (3, 3') and the arresting device (12) are formed and arranged separately from one another.

12. The apparatus as claimed in claim 10 or 11,
**characterized in that**
a rotatable fastening device (9, 9') is provided in order to fix the crankshaft (4, 4'), wherein the arresting device (12) is arranged and designed to arrest the fastening device (9, 9') for the crankshaft (4, 4').

13. The apparatus as claimed in claim 12,
**characterized in that**
the fastening device (9, 9') has a fastening flange (10, 10') which is arrestable by means of the arresting device (12), preferably by virtue of the arresting device (12) engaging on the fastening flange in the region of an outer circumference.

14. The apparatus as claimed in any of claims 10 to 13,
**characterized in that**
an open-loop and/or closed-loop control device (29), preferably comprising a microprocessor, is provided in order to realize and/or synchronize the rotational movement of the drive device (3, 3') and/or the control of the arresting device (12) and/or the control of the at least one impact tool (16, 16').

15. A computer program with program code means which cause the apparatus according to one of claims 10 to 14 to carry out the method as claimed in any of claims 1 to 9, in particular when the program is executed on an open-loop and/or closed-loop control device (29), in particular on a microprocessor.

## Revendications

1. Procédé de durcissement par choc mécanique de rayons de transition (8) d'un vilebrequin (4, 4'), en particulier de rayons de transition (8) situés entre des tourillons de bielle (5, 5') et des flasques de vilebrequin (7, 7') et/ou de rayons de transition (8) situés entre des tourillons principaux (6, 6') et les flasques de vilebrequin (7, 7') du vilebrequin (4, 4'), dans lequel le vilebrequin (4, 4') est tout d'abord tourné dans une position d'impact selon une direction de rotation, à l'aide d'un dispositif d'entraînement (3, 3'), **caractérisé en ce qu'**il est prévu un dispositif d'arrêt (12) pour bloquer le vilebrequin (4, 4') dans la position d'impact, dans lequel une force de percussion est appliquée dans au moins un rayon de transition (8) par au moins un outil à percussion (16, 16').

2. Procédé selon la revendication 1, **caractérisé en ce que**, pour le fonctionnement du dispositif d'entraînement (3, 3'), on utilise une régulation de position pour faire tourner le vilebrequin (4, 4') dans la position d'impact, après quoi on fait tourner le vilebrequin (4, 4') de préférence par paliers ou de manière cadencée.

3. Procédé selon la revendication 1 ou 2, **caractérisé en ce que** la commande du dispositif d'entraînement (3, 3') et la commande du dispositif d'arrêt (12) sont synchronisées l'une avec l'autre, de telle sorte que le dispositif d'arrêt (12) bloque le vilebrequin (4, 4') uniquement lorsque le vilebrequin (4, 4') est immobilisé dans la position d'impact.

4. Procédé selon l'une quelconque des revendications 1 à 3, **caractérisé en ce que** la commande du dispositif d'arrêt (12) et la commande dudit au moins un outil à percussion (16, 16') sont synchronisées l'une avec l'autre, de telle sorte que ledit au moins un outil à percussion (16, 16') applique la force de percussion dans ledit au moins un rayon de transition (8) du vilebrequin (4, 4') uniquement lorsque le vilebrequin (4, 4') est bloqué dans la position d'impact.

5. Procédé selon l'une quelconque des revendications 1 à 4, **caractérisé en ce que** le dispositif d'entraînement (3, 3') est réalisé sous la forme d'un entraînement direct, de préférence sans couplage.

6. Procédé selon l'une quelconque des revendications 1 à 5, **caractérisé en ce que** le dispositif d'arrêt (12) bloque indirectement le vilebrequin (4, 4') en faisant en sorte que le dispositif d'arrêt (12) bloque un dispositif de fixation rotatif (9, 9'), de préférence une bride de fixation (10, 10') du dispositif de fixation (9, 9'), sur lequel ou sur laquelle le vilebrequin (4, 4') est fixé.

7. Procédé selon l'une quelconque des revendications 1 à 6, **caractérisé en ce que** le dispositif d'arrêt (12) est conçu de manière à empêcher une rotation du vilebrequin (4, 4') dans le sens opposé et/ou dans le sens de rotation du vilebrequin (4, 4').

8. Procédé selon l'une quelconque des revendications 1 à 7, **caractérisé en ce que** le durcissement par choc mécanique est effectué de telle sorte que les empreintes d'impact (28) d'une tête d'impact (21) de l'outil à percussion (16, 16') se chevauchent de manière définie le long du rayon de transition (8) respectif qui entoure de façon annulaire le tourillon de bielle (5, 5') et/ou le tourillon principal (6, 6').

9. Procédé selon l'une quelconque des revendications 1 à 8, **caractérisé en ce que** ledit au moins un outil à percussion (16, 16') exécute un mouvement de percussion avec une périodicité, de préférence à une cadence qui est comprise entre 0,1 Hz et 50 Hz, de manière particulièrement préférée à une cadence qui est comprise entre 0,5 Hz et 5 Hz, et de manière plus particulièrement préférée à une cadence qui est comprise entre 0,5 Hz et 3 Hz, ou applique une force de percussion.

10. Dispositif de durcissement par choc mécanique de rayons de transition (8) d'un vilebrequin (4, 4'), en particulier de rayons de transition (8) situés entre des tourillons de bielle (5, 5') et des flasques de vilebrequin (7, 7') et/ou de rayons de transition (8) situés entre des tourillons principaux (6, 6') et les flasques de vilebrequin (7, 7') du vilebrequin (4, 4'), comprenant un dispositif d'entraînement (3, 3') qui permet de tourner le vilebrequin (4, 4') dans une position d'impact, **caractérisé en ce qu'**il est prévu un dispositif d'arrêt (12) pour bloquer le vilebrequin (4, 4') dans la position d'impact, au moins un outil à percussion (16, 16') étant en outre prévu pour appliquer, dans la position d'impact, une force de percussion dans au moins un rayon de transition (8).

11. Dispositif selon la revendication 10, **caractérisé en ce que** le dispositif d'entraînement (3, 3') et le dispositif d'arrêt (12) sont conçus et disposés de manière séparée l'un par rapport à l'autre.

12. Dispositif selon la revendication 10 ou 11, **caractérisé en ce qu'**il est prévu un dispositif de fixation rotatif (9, 9') pour fixer le vilebrequin (4, 4'), le dispositif d'arrêt (12) étant disposé et configuré de manière à bloquer le dispositif de fixation (9, 9') pour le vilebrequin (4, 4').

13. Dispositif selon la revendication 12, **caractérisé en ce que** le dispositif de fixation (9, 9') comprend une bride de fixation (10, 10'), ladite bride de fixation pouvant être bloquée par le dispositif d'arrêt (12), de préférence de telle sorte que le dispositif d'arrêt (12) s'engage sur la bride de fixation au niveau d'une périphérie extérieure.

14. Dispositif selon l'une quelconque des revendications 10 à 13, **caractérisé en ce qu'**il est prévu un dispositif de commande et/ou de régulation (29), qui comprend de préférence un microprocesseur, pour réaliser et/ou synchroniser le mouvement de rotation du dispositif d'entraînement (3, 3') et/ou la commande du dispositif d'arrêt (12) et/ou la commande dudit au moins un outil à percussion (16, 16').

15. Programme d'ordinateur comprenant des moyens de codage de programme qui amènent le dispositif selon l'une quelconque des revendications 10 à 14 à mettre en œuvre le procédé selon l'une quelconque des revendications 1 à 9, en particulier lorsque le programme est exécuté sur un dispositif de commande et/ou de régulation (29), en particulier sur un microprocesseur.
